# FASCICULE DE BREVET EUROPEEN

(11) **EP 4 314 517 B1**
(45) Date de publication et mention de la délivrance du brevet: **12.02.2025**
(21) Numéro de dépôt: 22715143.8
(22) Date de dépôt: 22.03.2022
(51) Int. Cl.: F02C 7/06, F01D 25/18

(54) **TUBE D'EJECTION INTEGRE A UN TUBE CENTRAL DE VENTILATION**
IN EIN ZENTRALES LÜFTUNGSROHR INTEGRIERTES AUSSTOSSROHR
EJECTION TUBE INTEGRATED INTO A CENTRAL VENTILATION TUBE

(30) Priorité: 26.03.2021 FR 2103109
(43) Date de publication de la demande: 07.02.2024
(73) Titulaire: SAFRAN AIRCRAFT ENGINES, 75015 Paris (FR)
(72) Inventeur: KAPALA, Patrick Edmond, 77550 MOISSY-CRAMAYEL (FR); CHANTOISEAU, Olivier Pascal Paul, 77550 MOISSY-CRAMAYEL (FR)
(74) Mandataire: Brevalex
(86) Numéro de dépôt international: PCT/FR2022/050526
(87) Numéro de publication internationale: WO 2022/200729

(56) Documents cités:
- FR-A1- 2 995 634
- US-A1- 2011 146 224
- US-A1- 2018 258 851

## Description

La présente invention se rapporte à un tube central de ventilation d'une turbomachine.

Une turbomachine, par exemple un turboréacteur, peut comprendre un système d'évacuation configuré pour extraire et canaliser de l'air de pressurisation des enceintes de palier et l'éjecter à l'atmosphère. Le système d'évacuation comprend habituellement un tube central de ventilation, dans lequel est positionnée une structure tubulaire intérieure qui forme un rétrécissement à l'intérieur du tube central de ventilation.

Des vibrations et des différences d'échauffement peuvent causer des fissures entre le tube central et la structure tubulaire intérieure, résultant en un endommagement du système d'évacuation. Le tube et la structure tubulaire intérieure sont deux pièces indépendantes qui sont en contact. Des sollicitations statiques et vibratoires peuvent conduire à la fissuration de la structure tubulaire intérieure dans la zone de contact avec le tube central de ventilation, résultant en un endommagement du système d'évacuation.

Les documents FR 2995634 A1 et US 2011/146224 A1 présentent des systèmes de l'art antérieur.

La présente invention propose par conséquent un système d'évacuation d'air avec une intégration améliorée de la structure tubulaire intérieure au sein du tube central de ventilation ainsi qu'une méthode de fabrication du système. Le système d'évacuation proposé intègre le tube central de ventilation et la structure tubulaire intérieure dans une pièce unique.

### EXPOSÉ DE L'INVENTION

C'est par conséquent un but de la présente invention d'offrir une partie amont (40) d'un système d'évacuation d'air (20) pour une turbomachine (30), comprenant :
- un tube (70) avec une extrémité amont (50) et une extrémité aval (60),
- une structure tubulaire intérieure (10) située à l'intérieur (80) dudit tube (70) et configurée pour y former un rétrécissement de sa section (170),
   la structure tubulaire intérieure (10) étant venue de matière avec le tube (10) à l'extrémité aval (60) du tube et librement suspendue à l'extrémité amont (50) du tube.

Ladite partie amont peut comprendre un espace libre (90) étant formé entre le tube (70) et la structure tubulaire intérieure (10) de façon à ce que le tube et la structure tubulaire intérieure sont liés uniquement à l'extrémité aval, le tube et la structure tubulaire intérieure étant de préférence liés uniquement le long d'une circonférence de l'extrémité aval.

Selon une variante, ledit tube et la structure tubulaire intérieure peuvent être séparés par une fente annulaire (100) à l'extrémité amont de façon à ce que la structure tubulaire intérieure soit librement suspendue à l'extrémité amont, la fente annulaire ayant de préférence une taille de 1.5 mm ou plus.

Une paroi (110) du tube peut comprendre au moins une ouverture (120) configurée pour permettre d'enlever une poudre non fondue, située entre le tube et la structure tubulaire intérieure.

Ledit tube (70) peut avoir une forme cylindrique, avec un axe longitudinal (220) et un premier angle (140) entre une paroi de la structure tubulaire intérieure (10) et l'axe longitudinal peut être de 50° ou moins.

Une épaisseur (150) de paroi (110) du tuyau et de la structure tubulaire intérieure peut être comprise entre 0.8 mm et 1.2 mm.

L'invention concerne également un système d'évacuation de l'air comprenant
- ladite partie amont et
- un tube d'extension (160),

le tube d'extension étant lié à l'extrémité aval du tube (70) de façon à en former une prolongation et à former une partie aval du système d'évacuation de l'air,
le tube d'extension étant lié à au tube (70) de préférence par une soudure (180).

Dans ledit système d'évacuation de l'air le tuyau d'extension peut comprendre un matériau différent du matériau de la partie amont.

La présente invention concerne aussi une turbomachine avec un dispositif d'évacuation (200) de l'air des enceintes de paliers,
l'air étant conduit vers l'extérieur de la turbomachine par un système d'évacuation de l'air tel que présenté ci-dessus.

L'invention concerne également un procédé de fabrication d'une partie amont d'un système d'évacuation d'air tel que présenté auparavant, par fusion laser sur lit de poudre.

Pendant ledit procédé de fabrication, la fusion laser peut avoir lieu depuis l'extrémité amont vers l'extrémité aval.

L'invention concerne aussi un procédé de fabrication du système d'évacuation de l'air présenté auparavant, le procédé comprenant les étapes présentées ci-dessus et une étape d'assemblage du tuyau d'extension à la partie amont par un procédé de soudage.

### BRÈVE DESCRIPTION DES DESSINS

La présente invention sera mieux comprise sur la base de la description qui va suivre et des dessins en annexe sur lesquels :
- la figure 1 montre une turbomachine comprenant un dispositif d'évacuation (200) de l'air des enceintes de paliers,
- la figure 2 montre un tube central de ventilation situé à l'intérieur du cône d'éjection,
- les figures 3a, 3b et 3c montrent une coupe de la partie amont du tube central de ventilation,
- les figures 4a et 4b montrent une coupe de la partie amont du tube central de ventilation avec un support de fabrication.

### EXPOSÉ DÉTAILLÉ DE MODES DE R ÉALISATION PARTICULIERS

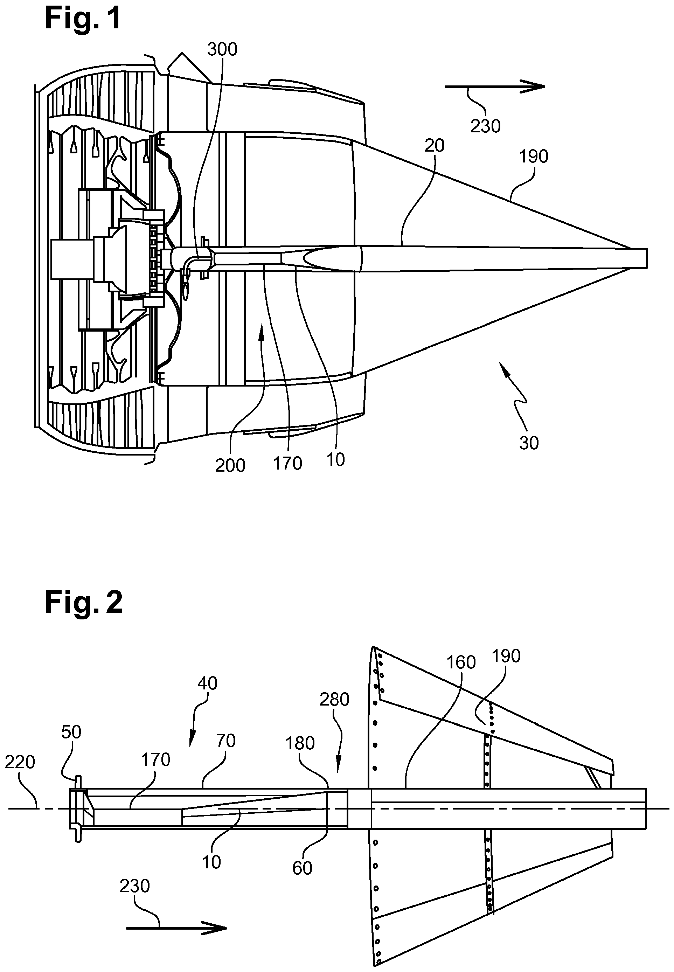

La figure 1 montre une turbomachine comprenant un dispositif d'évacuation (200) de l'air des enceintes de paliers.

Une turbomachine, par exemple un turboréacteur à double flux, comprend une entrée d'air comportant une soufflante dont le flux d'air en sortie se divise en un flux d'air qui pénètre dans le moteur et forme un flux chaud ou flux primaire, et en un flux d'air qui s'écoule autour du moteur et qui forme un flux froid ou flux secondaire.

Le moteur comprend typiquement, d'amont en aval, dans le sens d'écoulement des gaz, au moins un compresseur, une chambre de combustion, au moins une turbine, et un dispositif d'éjection dans lequel les gaz de combustion sortant de la turbine et formant le flux primaire sont mélangés au flux secondaire.

A son extrémité aval, la turbomachine comprend un cône d'éjection (190) du flux primaire, voire du mélange flux primaire-flux secondaire. Ce cône a une forme allongée dont l'extrémité amont de plus grand diamètre est fixée à un élément de la turbomachine, tel qu'un carter.

Un tube central de ventilation (20) traverse longitudinalement le cône d'éjection (190). Ce tube central de ventilation (20) a pour fonction d'extraire et de canaliser l'air déchargé d'huile par les déshuileurs de la turbomachine et de l'éjecter vers l'atmosphère par l'extrémité aval du tube (20), située sensiblement au niveau de l'extrémité aval du cône d'éjection (190). Ainsi, de l'air des enceintes de paliers de la turbomachine est conduit vers l'extérieur par le tube central de ventilation (20).

Le tube central de ventilation contient une structure tubulaire intérieure (10), laquelle comporte un rétrécissement (170), ou autrement dit une section à diamètre réduit (170), afin de provoquer un effet Venturi pour l'air circulant dans la structure tubulaire intérieure. Une buse (300) amène de l'air de purge vers ce rétrécissement (170), qui crée une aspiration à basse pression par l'effet Venturi, tirant l'air de purge de la buse pour ensuite l'éjecter vers l'extérieur. Sur cette figure, comme en figure 2, la direction du flux d''air, d'amont en aval dans la turbomachine en fonctionnement, est indiquée par une flèche 230.

La figure 2 montre le tube central de ventilation (20) situé à l'intérieur du cône d'éjection (190). Ce tube comprend une partie amont (40) suivie, en aval, d'un tube d'extension (160), dont l'entrée est indiquée par la flèche 280. La partie amont (40) comprend elle-même une extrémité amont (50) et une extrémité aval (60).

La partie amont comprend un tube (70), de préférence de forme cylindrique, ayant un axe longitudinal (220). La structure tubulaire intérieure (10) est située à l'intérieur de ce tube (70) et y forme le rétrécissement (170).

Le tube d'extension (160) est lié à l'extrémité aval (60) de la partie amont (40) de façon à former une prolongation du tube (70). Le tube d'extension peut être lié à la partie amont (40) par une soudure (180). Dans ce cas, le tube d'extension peut comprendre un matériau différent du matériau de la partie amont. Par exemple, cette dernière peut comprendre un matériau particulièrement bien adapté à une fabrication par fusion laser sur lit de poudre ou à un autre procédé de fabrication additive. Le tube d'extension peut comprendre un matériau adapté à une fabrication par d'autres méthodes.

Il est également envisageable de fabriquer la partie amont et le tube d'extension d'un seul tenant, par exemple par un procédé de fusion laser sur lit de poudre ou un autre procédé de fabrication additive.

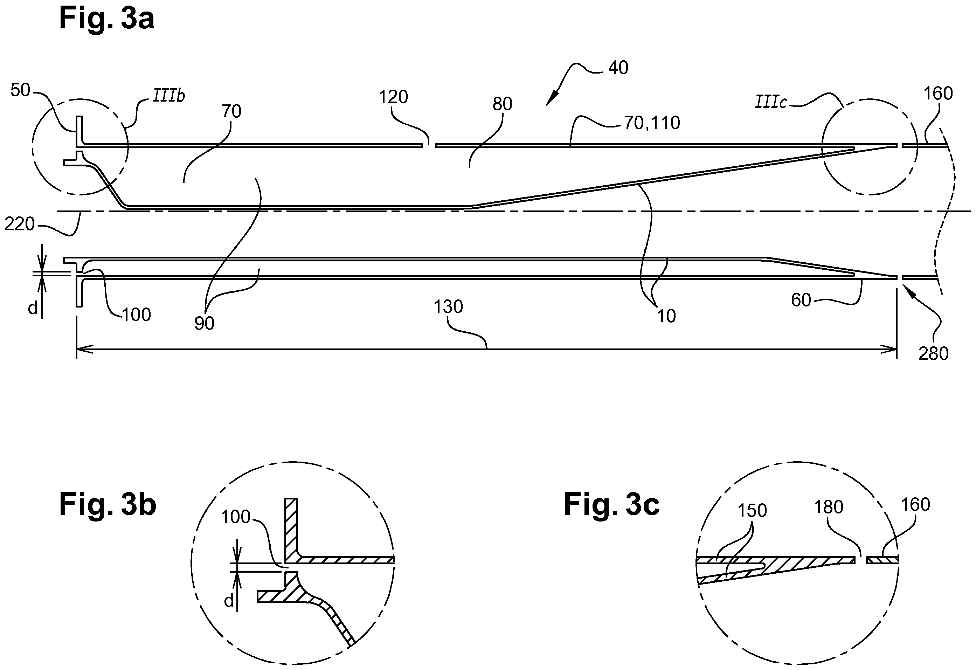

La figure 3a montre une coupe, dans un plan qui contient l'axe longitudinal (220) du tube (70), de la partie amont (40) du tube central de ventilation (20) de la figure 2. Sur cette figure, on voit également l'extrémité (280) du tube d'extension ainsi que la partie amont (40), comprenant le tube (70) entre l'extrémité amont (50) et l'extrémité aval (60). Le tube peut avoir un diamètre de 78 mm. La structure tubulaire intérieure (10) forme le rétrécissement (170) à l'intérieur (80) du tube. Autrement dit, de l'air qui entre par l'extrémité amont (50) pour sortir par l'extrémité aval doit traverser un passage dont la section, par rapport au diamètre du tube, se contracte d'abord pour s'élargir plus loin. De façon avantageuse, comme illustré en figure 3a, le rétrécissement (170) est asymétrique par rapport à l'axe longitudinal (220) du tube, plus précisément le rétrécissement est excentré par rapport à l'axe longitudinal (220). Autrement dit, l'air qui entre par l'extrémité amont (50) est dévié de l'axe longitudinal (220) par le rétrécissement asymétrique. La forme asymétrique a l'avantage d'éviter une rétention d'huile en amont de la zone du rétrécissement, ce qui assure en permanence un écoulement de l'huile vers l'extérieur.

La figure 3c montre un agrandissement de l'extrémité aval (60) de la structure tubulaire intérieure et du tube. La structure tubulaire intérieure est venue de matière avec le tube à l'extrémité aval (60). De façon générale, par une première pièce « venue » de matière avec une deuxième pièce on comprend que la première pièce et la deuxième pièce sont réalisées de manière intégrale et en une seule pièce. Autrement dit, la structure tubulaire intérieure et le tube sont réalisés de manière intégrale, ou bien encore, à l'extrémité aval, il existe une continuité de matière entre une paroi du tube et une paroi de la structure tubulaire intérieure. De préférence, la structure tubulaire intérieure est venue de matière avec le tube sur toute une circonférence à l'extrémité aval. De cette façon, la structure tubulaire intérieure et le tube sont liés de façon fiable et durable et la durée de vie du tube central de ventilation est assurée.

La figure 3b montre un agrandissement de l'extrémité amont (40) du tube central de ventilation. La structure tubulaire intérieure est librement suspendue à cette extrémité. Autrement dit, à l'extrémité amont, la structure tubulaire intérieure n'est pas liée au tube. Le tube et la structure tubulaire intérieure sont uniquement liés à l'extrémité aval de façon à laisser un espace libre (90) entre une paroi (110) du tube et la structure tubulaire intérieure. Le tube et la structure tubulaire intérieure peuvent être liés uniquement le long de la circonférence de l'extrémité aval. A l'extrémité amont se trouve un espace d'une taille d entre la structure tubulaire intérieure et le tube, comme illustré en figures 3a et 3b. Cet espace peut former une fente annulaire (100) à l'extrémité amont de façon à ce que la structure tubulaire intérieure y soit librement suspendue. La fente annulaire peut avoir une taille de 1.5 mm ou plus. L'espace libre (90) est en communication avec l'extérieur par l'espace laissé entre la structure tubulaire intérieure et le tube ou par la fente annulaire (100). La partie amont (40) est, de cette façon, particulièrement bien adaptée à une fabrication d'un seul tenant par un procédé de fusion laser sur lit de poudre. Suite à cette formation de la partie amont, l'espace libre (90) est rempli de poudre qui n'a pas été fusionnée pour former les parois (110) et autres parties de cette partie amont (40). Cette poudre peut être évacuée à l'extérieur par l'espace de taille d, ou la fente annulaire (100), comme illustré en figures 3a et 3b. Le tube et la structure tubulaire intérieure qui sont venus de matière à l'extrémité aval et libres à l'extrémité amont sont ainsi particulièrement bien adaptés à une fabrication d'un seul tenant, par une fusion laser sur lit de poudre. De façon avantageuse, la paroi (110) du tube peut comprendre une ou plusieurs ouverture(s) latérale(s) (120) configurée(s) pour permettre d'enlever la poudre non fondue ou non fusionnée.

L'épaisseur (150) de la paroi (110) du tube et de la structure tubulaire intérieure peut être de 0.8 mm ou de 1 mm ou de 1.2 mm. Il est également envisageable d'avoir une épaisseur qui varie entre 0.8mm et 1 mm ou entre 1 mm et 1.2 mm ou entre 0.8 mm et 1.2 mm. Il est ainsi possible de choisir une épaisseur ou plusieurs épaisseurs pour la partie amont du tube central de ventilation. Une épaisseur entre 0.8 mm et 1.2 mm est particulièrement bien adaptée pour une fabrication par fusion laser sur lit de poudre. La longueur (130) de la partie amont (40) du tube central de ventilation peut être de 600 mm ou d'une longueur inférieure, ce qui est compatible avec une fabrication aisée sur un grand nombre d'installations de fusion laser sur lit de poudre.

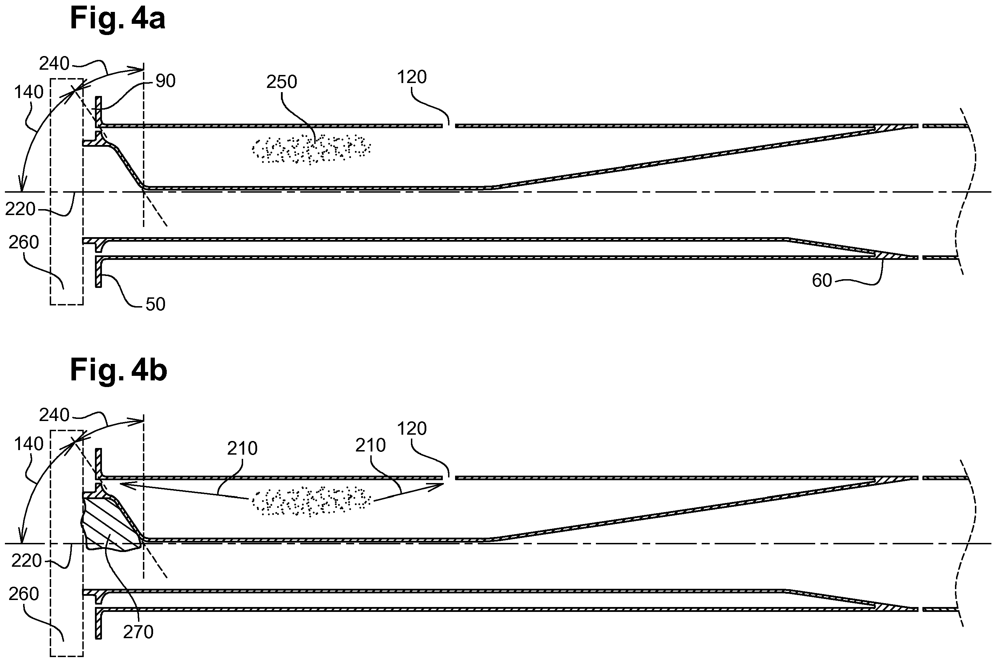

Les figures 4a et 4b montrent une coupe selon le même plan que la figure 3a. Ces figures montrent également une poudre (250), située entre le tube et la structure tubulaire intérieure, ainsi qu'un support de fabrication (260), lequel ne fait pas partie du tube central de ventilation. La référence 140 désigne un premier angle (140) d'orientation de la paroi de la structure tubulaire intérieure par rapport à l'axe longitudinal (220). La référence 240 désigne un angle d'orientation de la paroi de la structure tubulaire intérieure par rapport à un axe perpendiculaire à l'axe longitudinal (220).

Le support de fabrication (260) peut être plat et supporter la fabrication d'une bride (90) à l'extrémité amont du tube. Durant la formation de la bride, par fusion de poudre, le support fournit un appui au matériau formant la bride, jusqu'à sa rigidification. De façon générale, le support (260) facilite le démarrage de la construction de la pièce. Le support (260) peut être en continuité de matière avec la pièce. Dans ce cas, les premiers grains de poudre qui forment la bride sont fusionnés avec la matière du support (260). Dans ce cas, le support doit être séparé de la pièce en final, par exemple par usinage.

De préférence, le premier angle (140) entre la paroi et l'axe longitudinal est de 50° ou moins. Autrement dit, la somme du premier angle et du deuxième angle étant de 90°, le deuxième angle entre la paroi et un axe vertical est de 40° ou plus. Un premier angle ou un deuxième angle de paroi compris dans cette plage de valeurs est particulièrement bien adapté pour la fabrication par fusion laser sur lit de poudre Ladite plage de valeurs est avantageuse parce qu'une paroi ayant un premier angle de 50° ou moins avec l'axe longitudinal peut être fabriquée sans un ajout de matière (270) entre la pièce et le support (260), tel qu'il est montré sur la figure 4b.

L'ajout de matière (270) devient nécessaire pour un premier angle de plus de 50°. Il est formé du côté de l'entrée de l'air et stabilise la pièce ou la paroi durant la fusion de poudre. L'ajout de matière est ensuite usiné pour former la paroi. Ce bloc de matériau formant l'ajout de matière (270) peut être fabriqué en fabrication d'ajout de matière, comme par fusion de poudre. L'ajout de matière peut présenter des paramètres différents de celles de la pièce, comme par exemple une densité moindre. La densité moindre de l'ajout de matière par rapport à la pièce facilite l'usinage, par exemple pour former la paroi.

Ainsi toute la pièce peut être fabriquée d'un seul tenant, y compris les ajouts de matière. En résumé, il faut distinguer le support de fabrication (260) permettant de supporter l'ensemble de la pièce dès le début de la fabrication et le ou les ajout de matière (270) qui peuvent être nécessaires à la fabrication de certaines parties de la pièce parce que l'angle de fabrication est trop faible.

Le procédé de fabrication comprend la fabrication de la partie amont (40) en un seul tenant par fusion laser sur lit de poudre. De façon avantageuse, cette fabrication additive par fusion laser débute par la formation de l'extrémité amont et se termine par la fabrication de l'extrémité aval. La bride (90) peut ainsi être facilement fabriquée au début du procédé, en prenant appui sur le support (260). De façon alternative, la fabrication peut avoir lieu de l'extrémité aval (60) vers l'extrémité amont (50).

En fin de procédé de fusion laser, de la poudre (250) reste dans l'espace libre (90) et doit être enlevée. Il s'agit de poudre non utilisée pour la formation des parois. Cette poudre peut être enlevée (210) par l'espace prévu entre le tube et la structure tubulaire intérieure, situé à l'extrémité amont. La poudre non fondue peut être enlevée par la fente annulaire (100). De façon avantageuse, de la poudre peut également sortir par la ou les ouvertures (120) dans la paroi (110) du tube.

Le tube et la structure tubulaire intérieure sont ainsi fabriqués d'un seul tenant par un procédé additif, de préférence de fusion laser sur lit de poudre comme décrit avant.

La partie amont par fusion laser sur lit de poudre peut être réalisée en "Inconel 718" (marque déposée). Sous une forme particulière, l'Iconel 718 peut comprendre, en pourcentage massique, 50-55% Ni, 17-21% Cr, 15-21% Fe, 4.75-5.5% Nb, 2.8-3.3% Mo, 0.65-1.15% Ti et 0.2-0.8% Al. Ce matériau est particulièrement bien adapté pour une fabrication par fusion laser sur lit de poudre.

Le tube d'extension peut aussi être réalisé en Inconel 718. De façon alternative, le tube d'extension peut être réalisé en "Inconel 625" (marque déposée). Sous une forme particulière, l'Iconel 625 peut comprendre, en pourcentage massique, Ni 58% ou plus, Cr 20-23%, Fe 5% ou moins, Mo 8-10%, Nb 3.15-4.15, Co 1% ou moins, Mn 0.5% ou moins, Al 0.4% ou moins, Ti 0.4% ou moins, Si 0.5% ou moins, C 0.1% ou moins, S 0.015% ou moins et P 0.015% ou moins.

## Revendications

1. Partie amont (40) d'un système d'évacuation d'air (20) pour une turbomachine (30), comprenant :
- un tube (70) avec une extrémité amont (50) et une extrémité aval (60),
- une structure tubulaire intérieure (10) située à l'intérieur (80) dudit tube (70) et configurée pour y former un rétrécissement de sa section (170),
**caractérisé en ce que** la structure tubulaire intérieure (10) est venue de matière avec le tube (70) à l'extrémité aval (60) du tube et librement suspendue à l'extrémité amont (50) du tube.

2. Partie amont selon la revendication 1 dans lequel
un espace libre (90) est formé entre le tube (70) et la structure tubulaire intérieure (10) de façon à ce que le tube et la structure tubulaire intérieure sont liés uniquement à l'extrémité aval,
le tube et la structure tubulaire intérieure étant de préférence liés uniquement le long d'une circonférence de l'extrémité aval.

3. Partie amont selon la revendication 1 ou 2 dans lequel
le tube et la structure tubulaire intérieure sont séparés par une fente annulaire (100) à l'extrémité amont de façon à ce que la structure tubulaire intérieure soit librement suspendue à l'extrémité amont, la fente annulaire ayant de préférence une taille de 1.5 mm ou plus.

4. Partie amont selon l'une des revendications 1 à 3 dans lequel
une paroi (110) du tube comprend au moins une ouverture (120) configurée pour permettre d'enlever une poudre non fondue, située entre le tube et la structure tubulaire intérieure.

5. Partie amont selon l'une des revendications 1 à 4 dans lequel
- le tube (70) a une forme cylindrique, avec un axe longitudinal (220) et
- un premier angle (140) entre une paroi de la structure tubulaire intérieure (10) et l'axe longitudinal est de 50° ou moins.

6. Partie amont selon l'une des revendications 1à 5 dans lequel
une épaisseur (150) de paroi (110) du tube et de la structure tubulaire intérieure est comprise entre 0.8 mm et 1.2 mm.

7. Système d'évacuation de l'air comprenant
- une partie amont selon l'une des revendications 1 à 6 et
- un tube d'extension (160),
le tube d'extension étant lié à l'extrémité aval du tube (70) de façon à en former une prolongation et à former une partie aval du système d'évacuation de l'air,
le tube d'extension étant lié à au tube (70) de préférence par une soudure (180).

8. Système d'évacuation de l'air selon la revendication 7 dans lequel
le tube d'extension comprend un matériau différent du matériau de la partie amont.

9. Turbomachine avec un dispositif d'évacuation (200) de l'air des enceintes de paliers,
l'air étant conduit vers l'extérieur de la turbomachine par un système d'évacuation de l'air selon l'une des revendications 7 ou 8.

10. Procédé de fabrication d'une partie amont d'un système d'évacuation d'air selon l'une des revendications 1 à 6, par fusion laser sur lit de poudre.

11. Procédé de fabrication selon la revendication 10, la fusion laser ayant lieu depuis l'extrémité amont vers l'extrémité aval.

12. Procédé de fabrication d'un système d'évacuation de l'air selon la revendication 7 ou 8, le procédé comprenant les étapes selon l'une des revendications 10 ou 11 et une étape d'assemblage du tube d'extension à la partie amont par un procédé de soudage.

## Patentansprüche

1. Stromaufwärts gelegener Teil (40) eines Abluftsystems (20) für eine Turbomaschine (30), umfassend:
- ein Rohr (70) mit einem stromaufwärts gelegenen Ende (50) und einem stromabwärts gelegenen Ende (60),
- eine innere Rohrstruktur (10), die sich im Inneren (80) des Rohres (70) befindet und konfiguriert ist, um dort eine Verengung seines Querschnitts (170) zu bilden,
**dadurch gekennzeichnet, dass** die innere Rohrstruktur (10) in einem Stück mit dem Rohr (70) am stromabwärts gelegenen Ende (60) des Rohres ist, und am stromaufwärts gelegenen Ende (50) des Rohres frei aufgehängt ist.

2. Stromaufwärts gelegener Teil nach Anspruch 1, wobei
ein Freiraum (90) zwischen dem Rohr (70) und der inneren Rohrstruktur (10) gebildet ist, sodass das Rohr und die innere Rohrstruktur nur am stromabwärts gelegenen Ende verbunden sind,
wobei das Rohr und die innere Rohrstruktur vorzugsweise nur entlang eines Umfangs des stromabwärts gelegenen Endes verbunden sind.

3. Stromaufwärts gelegener Teil nach Anspruch 1 oder 2, wobei
das Rohr und die innere Rohrstruktur durch einen ringförmigen Schlitz (100) am stromaufwärts gelegenen Ende getrennt sind, sodass die innere Rohrstruktur am stromaufwärts gelegenen Ende frei aufgehängt ist, wobei der ringförmige Schlitz vorzugsweise eine Größe von 1,5 mm oder mehr aufweist.

4. Stromaufwärts gelegener Teil nach einem der Ansprüche 1 bis 3, wobei
eine Wand (110) des Rohres mindestens eine Öffnung (120) umfasst, die konfiguriert ist, um zu ermöglichen, ein nicht geschmolzenes Pulver zu entfernen, das sich zwischen dem Rohr und der inneren Rohrstruktur befindet.

5. Stromaufwärts gelegener Teil nach einem der Ansprüche 1 bis 4, wobei
- das Rohr (70) eine zylindrische Form mit einer Längsachse (220) aufweist, und
- ein erster Winkel (140) zwischen einer Wand der inneren Rohrstruktur (10) und der Längsachse 50° oder weniger beträgt.

6. Stromaufwärts gelegener Teil nach einem der Ansprüche 1 bis 5, wobei
eine Dicke (150) einer Wand (110) des Rohres und der inneren Rohrstruktur zwischen 0,8 mm und 1,2 mm liegt.

7. Abluftsystem, umfassend
- einen stromaufwärts gelegenen Teil nach einem der Ansprüche 1 bis 6, und
- ein Erweiterungsrohr (160),
wobei das Erweiterungsrohr mit dem stromabwärts gelegenen Ende des Rohres (70) verbunden ist, um eine Verlängerung davon zu bilden, und um einen stromabwärts gelegenen Teil des Abluftsystems zu bilden,
wobei das Erweiterungsrohr vorzugsweise durch eine Schweißnaht (180) mit dem Rohr (70) verbunden ist.

8. Abluftsystem nach Anspruch 7, wobei
das Erweiterungsrohr einen Werkstoff umfasst, der sich von dem Werkstoff des stromaufwärts gelegenen Teils unterscheidet.

9. Turbomaschine mit einer Vorrichtung zum Abführen (200) der Luft aus den Lagerkammern,
wobei die Luft durch ein Abluftsystem nach einem der Ansprüche 7 oder 8 nach außerhalb der Turbomaschine geleitet wird.

10. Verfahren zur Herstellung eines stromaufwärts gelegenen Teils eines Abluftsystems nach einem der Ansprüche 1 bis 6, durch selektives Laserschmelzen auf Pulverbett.

11. Verfahren zur Herstellung nach Anspruch 10, wobei das Laserschmelzen vom stromaufwärts gelegenen Ende aus zum stromabwärts gelegenen Ende erfolgt.

12. Verfahren zur Herstellung eines Abluftsystems nach Anspruch 7 oder 8, wobei das Verfahren die Schritte nach einem der Ansprüche 10 oder 11 und einen Schritt zum Anbringen des Erweiterungsrohres am stromaufwärts gelegenen Teil durch ein Schweißverfahren umfasst.

## Claims

1. Upstream part (40) of an air-discharge system (20) for a turbomachine (30), comprising:
- a tube (70) with an upstream end (50) and a downstream end (60),
- an internal tubular structure (10) located in the interior (80) of said tube (70) and configured to form therein a narrowing of its cross section (170),
**characterized in that** the internal tubular structure (10) is made in one piece with the tube (70) at the downstream end (60) of the tube and freely suspended at the upstream end (50) of the tube.

2. Upstream part according to claim 1, wherein:
a free space (90) is formed between the tube (70) and the internal tubular structure (10) so that the tube and the internal tubular structure are connected solely at the downstream end.
the tube and the internal tubular structure preferably being connected solely along a circumference of the downstream end.

3. Upstream part according to claim 1 or 2, wherein:
the tube and the internal tubular structure are separated by an annular slot (100) at the upstream end so that the internal tubular structure is freely suspended at the upstream end, the annular slot preferably having a size of 1.5 mm or more.

4. Upstream part according to one of claims 1 to 3, wherein:
a wall (110) of the tube comprises at least one opening (120) configured to make it possible to remove any non-molten powder located between the tube and the internal tubular structure.

5. Upstream part according to one of claims 1 to 4, wherein:
- the tube (70) has a cylindrical shape, with a longitudinal axis (220) and
- a first angle (140) between a wall of the internal tubular structure (10) and the longitudinal axis is 50° or less.

6. Upstream part according to one of claims 1 to 5, wherein:
a thickness (150) of the wall (110) of the tube and of the internal tubular structure is between 0.8 mm and 1.2 mm.

7. Air-discharge system, comprising
- and upstream part according to one of claims 1 to 6 and
- an extension tube (160),
the extension tube being connected to the downstream end of the tube (70) so as to form an extension thereof and to form a downstream part of the air-discharge system,
the extension tube being connected to the tube (70) preferably by a weld (180).

8. Air-discharge system according to claim 7, wherein:
the extension tube comprises a material different from the material of the upstream part.

9. Turbomachine with a device (200) for discharging air from the bearing chambers,
the air being conducted towards the outside of the turbomachine by an air-discharge system according to one of claims 7 or 8.

10. Method for manufacturing an upstream part of an air-discharge system according to one of claims 1 to 6, by powder bed laser fusion.

11. Manufacturing method according to claim 10, the laser fusion taking place from the upstream end towards the downstream end.

12. Method for manufacturing an air-discharge system according to claim 7 or 8, the method comprising the steps according to one of claims 10 or 11 and a step of assembling the extension tube at the upstream part by a welding method.
